# EUROPEAN PATENT APPLICATION

(11) **EP 2 006 415 A2**
(43) Date of publication of application: **24.12.2008**
(21) Application number: 06730864.3
(22) Date of filing: 31.03.2006
(51) Int. Cl.: C23C 18/24, C08J 7/14, C25D 5/00, C25D 5/56

(54) **SURFACE MODIFICATION LIQUID FOR PLASTIC AND METHOD OF METALLIZING PLASTIC SURFACE THEREWITH**

(71) Applicant: Ebara-Udylite Co., Ltd., Tokyo 110-0016 (JP)
(72) Inventor: SHIMIZU, Satoru, Fujisawa-shi, Kanagawa 251-0876 (JP)
(74) Representative: Hartz, Nikolai
(86) International application number: PCT/JP2006/306916
(87) International publication number: WO 2007/116493

(57) **Abstract**

A surface modification liquid for plastic that in pretreatment for metallization of a plastic surface by metal plating, solves the problems of etching treatment with the use of conventional etching liquid containing chromic acid, etc. There is provided a surface modification liquid for plastic **characterized by** containing permanganic acid, phosphoric acid and nitric acid.

## Description

### Technical Field

The present invention relates to a surface modification liquid for plastic and, more specifically, it relates to a modification liquid for plastic surface which is utilized for metallizing the plastic surface, and a method of metallizing the plastic surface utilizing the same.

### Background Art

Conventionally, when a metallization treatment is carried out on a plastic molding product such as an acrylonitrile butadiene styrene (ABS) resin, a polycarbonate/acrylonitrile butadiene styrene (PC/ABS), or the like by plating, it is known to apply an etching treatment for roughening the plastic molding product by a mixture of chromic acid and sulfuric acid before the plating treatment in order to increase the adhesiveness between the plastic molding product and the plated film. Then, as an electroconduction treatment to the plastic surface after the etching treatment, it has been also known to apply electroless plating or direct plating by using a palladium/tin colloidal mixture or metal sulfide.

However, the etching treatment has the problem of deteriorating the working environment since the operation is carried out at a high temperature of at least 60°C using harmful hexavalent chromium. In addition, attention must be paid to the treatment of wastewater from the etching treatment. Further, a conditioning treatment for increasing adsorption of a palladium catalyst is necessary for plastics such as PC/ABS to which plating is less deposited in a plating step after the etching treatment, but electroless plating is sometimes deposited also to a jig by the treatment and, accordingly, it is necessary to replace jigs upon transfer from the conditioning treatment to the electrolytic plating and this results in a problem that the workability is extremely poor. In view of the problems described above, it has been demanded to provide an etching agent instead of a liquid mixture of chromic acid and sulfuric acid.

Then, an etching treatment with a liquid mixture of a permanganate and phosphoric acid instead of a liquid mixture of chromic acid and sulfuric acid has been reported (Patent document 1 or the like). However, since the degree of roughening by etching is low and the surface modification is not sufficient by the treatment, this gives a problem that the adsorption amount of a catalyst metal for electroless plating or direct plating is not sufficient and a practical utilizability is poor.
Patent document 1: WO2005/094394

### Disclosure of the Invention

### Problems to be Solved by the Invention

A subject of the present invention is to provide a surface modification liquid for plastic capable of thoroughly dissolving the problems described above in existent etching liquids containing chromic acid or the like, as the pretreatment for metallizing the plastic surface by metal plating.

### Means for Solving the Problems

As a result of diligent research in order to solve the above-mentioned problems, the inventors have found that a surface modification liquid comprising a plurality of specific acids in combination remarkably modifies a plastic surface, improves the wettability, increases the adsorption amount of metal ions as a catalyst, facilitates the subsequent metal plating step compared with the existent etching liquids containing chromic acid or the like and, in addition, solves the problem of local lack of plating and insufficient adhesion. Further, it has been found that since the surface modification liquid has a weak effect on a vinyl chloride sol coating or a fluoro resin coating on a plating jig, plating metal does not deposit on the coating of jig and can be deposit selectively only on the plastic surface by conducting metallization to the plastic surface utilizing the liquid, and have accomplished the present invention.

That is, the invention provides a surface modification liquid for plastic characterized by containing permanganic acid, phosphoric acid, and nitric acid.

Further, the invention provides a method of metallizing a plastic surface by treating the plastic surface with the surface modification liquid for plastic, then, applying a catalyst and, further, carrying out metal plating.

Further, the invention provides a method of metallizing a plastic surface characterized by treating the plastic surface with the surface modification liquid for plastic, further treating the same with an aqueous alkaline solution of permanganese acid, then, applying a catalyst and, subsequently, carrying out metal plating.

Furthermore, the invention provides a method of metallizing a plastic surface characterized by treating the plastic surface with the surface modification liquid for plastic, then, forming a metal sulfide film and, further, carrying out metal plating.

Furthermore, the invention provides a method of modifying a plastic surface characterized by treating the plastic surface with the surface modification liquid for plastic.

### Effect of the Invention

By treating the plastic surface using the surface modification liquid of the invention, unevennesses of about several microns are formed at the surface and, at the same time, a great amount of hydrophilic functional groups such as hydroxyl groups, carbonyl groups, and carboxyl groups can be formed on the surface. As a result, it is possible to improve the wettability of the plastic surface, increase the adsorption amount of the catalyst metal, etc.

Further, since the surface modification liquid of the invention can be caused to act on plastics at a room temperature, it is less energy-consuming and extremely advantageous in view of energy cost when compared with an etching treatment using an etching liquid containing chromic acid or the like that requires a high temperature of 60°C or higher.

Accordingly, the surface modification liquid of the invention can be utilized as a substitute for an etching liquid containing harmful chromic acid or the like used so far.

Further, when metallization is conducted by using metal plating to the plastics treated by the surface modification liquid of the invention, it is possibly to improve plating covering and enhance adhesiveness.

Further, since no conditioning treatment is necessary by the use of the modification liquid of the invention, even in a case of using plastics such as PC/ABS to which plating metal is less deposited in the existent method, metal is not deposited on the jig and continuous treatment is possible as far as electrolytic plating without replacing jigs.

Accordingly, plating steps can also be simplified by utilizing the surface modification liquid of the invention to the metallizing method for the plastic surface.

### Best Mode for Carrying Out the Invention

The surface modification liquid for plastic of the invention (hereinafter referred to as "modification liquid of the invention") comprises permanganic acid, phosphoric acid, and nitric acid as essential ingredients. In the invention, since the performance is lowered when any one of the three ingredients is not present, all of the three ingredients are essential ingredients.

The supply source for permanganic acid in the modification liquid of the invention is not particularly restricted and, for example, metal salts of permanganic acid such as potassium permanganate, and sodium permanganate can be utilized. The formulation amount of permanganic acid in the modification liquid of the invention is about from 0.005 to 0.1 mol/L (hereinafter mol/L is simply referred to as M) and, preferably, from 0.01 to 0.05M in the case of potassium permanganate.

Further, also the supply source for phosphoric acid is not restricted particularly and, for example, phosphoric acid, as well as metal salts of phosphoric acid such as sodium primary phosphate, sodium secondary phosphate, sodium triphosphate, sodium metaphosphate, sodium pyrophosphate, and sodium hexametaphosphate can be utilized. The formulation amount of phosphoric acid in the modification liquid of the invention is about 3 to 13 M and, preferably, 6 to 13M in the case of phosphoric acid.

Further, also the supply source for nitric acid is not particularly restricted and, for example, nitric acid, as well as metal salts of nitric acid such as sodium nitrate can be utilized. The formulation amount of nitric acid in the modification liquid of the invention is 0.1 M or more and, preferably, 1 M or more and, more preferably, about 2 to 5 M in the case of nitric acid. As the formulation amount of nitric acid is higher, the modification effect of the plastic surface is enhanced more and the formation of hydrophilic functional groups such as hydroxyl groups, carbonyl groups, carboxyl groups is increased. In a case where the formulation amount of nitric acid is 2 M or more, strong modification is possible even in a plastic which is less modified with the existent etching liquids containing chromic acid or the like, for example, PC/ABS at high polycarbonate content and, in this case, a sufficient modification effect can be obtained even in a case where the permanganic acid concentration is 0.1 M or less.

The modification liquid of the invention is prepared by mixing the essential ingredients described above in accordance with a common method and the modification effect for the plastic surface is more enhanced when perchloric acid is further incorporated. As the supply source of perchloric acid, perchloric acid, as well as metal salts of perchloric acid, for example, sodium perchlorate or potassium perchlorate can be utilized. The formulation amount of perchloric acid to the modification liquid of the invention is 0.1 to 3 M and, preferably, 0.5 to 2 M as perchloric acid.

The modification to the plastic surface using the modification liquid of the invention can be conducted, for example, as described below.

That is, treatment may be conducted by controlling the liquid temperature of the modification liquid of the invention to 0 °C to 50 °C, preferably, 10°C to 30°C, and immersing a plastic therein for 1 second to 30 minutes and, preferably, 1 minute to 10 minutes. Further, before treating the plastic by using the modification liquid of the invention, a degreasing treatment such as alkali dipping may be applied optionally.

Plastics modified at the surface by the modification liquid of the invention include various kinds of plastics and examples of them can include polyacetates, polystyrenes, polycarbonates, polyamides, aromatic polyamides, polyethylenes, polypropylenes, acrylonitrile butadiene styrenes (ABS), polycarbonate/acrylonitrile butadiene styrenes (PC/ABS), acrylonitrile styrenes, polyetheretherketones, polyethylene terephthalates, polybutylene terephthalates, polysulfones, polyether sulfones, polyether imides, modified polyphenylene ethers, polyphenylene sulfides, polyamideimides, polyimides, epoxy resins, liquid crystal polymers, and copolymers of the above-mentioned polymers. The modification liquid of the invention is preferred for modifying the surface of the plastics described above, particularly, ABS and PC/ABS.

As described above, the plastic modified at the surface with the modification liquid of the invention is etched at the surface and formed with unevennesses of about several microns, and at the same time, formed with a great amount of hydrophilic functional groups such as hydroxyl groups, carbonyl groups, carboxyl groups, etc. Accordingly, the plastic modified by the modification liquid of the invention is improved more in the wettability and a greater amount of catalyst can be applied to the plastic surface compared with those modified by the existent etching liquid containing chromic acid or the like.

The plastic modified at the surface with the modification liquid of the invention may be further treated with an aqueous alkaline solution of permanganic acid. The solution is an aqueous solution formed by controlling a permanganate such as potassium permanganate or sodium permanganate to about 0.1 M, and controlling the pH thereof to an alkaline property of pH 13 or higher with sodium hydroxide or the like. For treating the plastic by the aqueous alkaline solution of permanganic acid, treatment may be conducted by controlling the liquid temperature of the aqueous solution to 50°C to 80°C and immersing the surface modified plastic therein for 1 minute to 5 minutes. This is preferred, since the treatment of the plastic by the alkaline solution of permanganic acid further enhances the modifying effect and increases the metal adsorption amount of the catalyst or the like.

The plastic modified at the surface as described above can be metallized by subsequently applying the catalyst and further carrying out electroless metal plating or electrolytic plating (direct plating). Further, it is also possible to conduct metallization by forming a sulfide film such as of bismuth, cobalt, tin, silver, copper, or palladium on the plastic modified at the surface and further conduct electrolytic plating.

For applying the catalyst, a metal colloid catalyst for usual plating using palladium, cobalt, copper, silver, nickel, bismuth, tin, etc. as the catalyst metal can be utilized. For applying the catalyst to the plastic surface, treatment may be conducted by controlling the liquid temperature of the solution containing the catalyst to 10°C to 60°C, preferably, 20°C to 50°C and immersing therein surface modified plastic for 1 second to 30 minutes and, preferably, 1 minute to 10 minutes.

Further, the modification liquid of the invention is preferred since it can form a great amount of hydrophilic functional groups such as carboxyl groups on the plastic surface and, accordingly, this can particularly increase the amount of the catalyst to be applied and can selectively apply the palladium catalyst to the modified plastic as a substrate to be plated, with no plating to the jig, by using a catalyst solution of a palladium-amino acid complex that is adsorbed selectively to the surface having carboxyl groups as described in Japanese Patent Application No. 2005-351998 already filed previously (on December 6, 2005) by the present applicant.

A typical example of the palladium-amino acid complex described above is represented by the following formula (I) in which an amino group and a carboxyl group of each basic amino acid is coordinated to palladium. The palladium complex includes a trans isomer represented by the following formula (I) and, in addition, a cis isomer represented by the following formula (I') as a structural isomer and any of them may be utilized, or a mixture of them may be used in this invention.

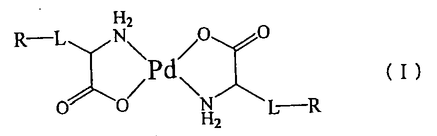

(wherein L represents an alkylene group and R represents an amino group or a guanidyl group). 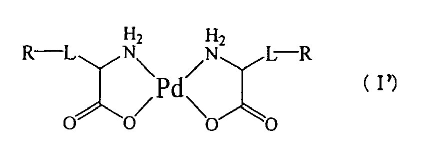 (wherein L and R have the same meanings as described above).

Among the components forming the palladium complex (I) or the structural isomer thereof (hereinafter referred to as "the palladium complex (I)"), the palladium (Pd) acts as a catalyst metal. A palladium salt such as palladium chloride, palladium sulfate, or palladium nitrate may be used for producing the palladium complex (I).

The basic amino acid may be an amino acid having a cationic group (e.g. an amino group, a guanidyl group), such as lysine, arginine, or ornithine. Examples of the basic amino acids include L-lysine, D-lysine, DL-lysine, L-lysine hydrochloride, D-lysine hydrochloride, DL-lysine hydrochloride, L-lysine hydrobromide, D-lysine hydrobromide, DL-lysine hydrobromide, L-arginine, D-arginine, DL-arginine, L-arginine hydrochloride, D-arginine hydrochloride, DL-arginine hydrochloride, L-arginine hydrobromide, D-arginine hydrobromide, DL-arginine hydrobromide, L-ornithine, D-ornithine, DL-ornithine, L-ornithine hydrochloride, D-ornithine hydrochloride, DL-ornithine hydrochloride, L-ornithine hydrobromide, D-ornithine hydrobromide, and DL-ornithine hydrobromide.

The palladium catalyst (I) is prepared by mixing 1 mol of a palladium salt solution, 2 mol or more of an aqueous basic amino acid solution at a temperature of about 20°C to 100°C and, after complete solution of them, controlling the pH to about 4.0 to 7.5.

The palladium complex (I) solution prepared in the above manner may be purified by a known method to obtain a purified material, and may be concentrated and freeze-dried to obtain a powder, if necessary.

The processing solution for catalyst application may be prepared by controlling the concentration of the palladium complex (I) solution obtained in the above manner, or by diluting or dissolving the purified material or the powder into a desired concentration using water.

The concentration of the palladium complex (I) in the processing solution for catalyst application is such that the equivalent metallic palladium concentration is within the range of 0.5 mg/L to its saturated concentration, preferably 1 mg/L to 1,000 mg/L. The pH of the solution is preferably within the range of 3 to 9, particularly preferably within the range of 4 to 8, though the preferred pH depends on the type of the basic amino acid used.

In a method of applying the palladium complex obtained as described above to a plastic surface, the liquid temperature of the processing solution for catalyst application is at first controlled to 10°C to 60°C, preferably 20°C to 50°C, a plastic is immersed therein for 1 second to 30 minutes, preferably from 1 minute to 10 minutes to adsorb the palladium catalyst on the plastic surface. Then, this may be immersed in an aqueous solution containing a reducing agent such as dimethyl amine-borane or sodium borohydride, thereby reducing palladium ions in the complex into a metal.

The plastic surface on which the catalyst has been applied may be metallized by metal plating such as electroless metal plating or direct plating in accordance with a common method.

In a case of conducting electroless metal plating as metal plating, any of known solution such as an electroless nickel plating solution, an electroless copper plating solution, or an electroless cobalt plating solution, etc. can be used. Further, plating conditions may also be in accordance with the common method.

A preferred embodiment of the electroless metal plating in the invention includes conducting a plating treatment by immersing a plastic on which a catalyst has been applied into an electroless nickel plating solution at pH of 8 to 10 and at a liquid temperature of 30°C to 50°C for 5 minutes to 15 minutes.

On the other hand, in a case of conducting direct plating as the metal plating, usual direct plating or a direct plating treatment with a metal sulfide such as of bismuth or cobalt as described in JP-A-2002-146589 (Applicant: Shipley Company, L.L.C.) may be used.

In a preferred embodiment of direct plating in the invention, a plastic on which a catalyst has been applied is immersed in an aqueous solution containing 0.01 M to 1M of a metal salt such as of bismuth or cobalt at 0°C to 50°C for 1 second to 5 minutes and then immersed in an aqueous solution containing about 0.1M sodium sulfide at 0°C to 50°C for 1 second to 5 minutes thereby forming a conductive metal sulfide to the plastic surface. Then, the plastic formed with a conductive metal sulfide is immersed in a general-purpose electrolytic nickel plating bath such as a Watts bath and direct plating is conducted under commonly used conditions.

For the plastic metallized by applying metal plating such as electroless plating or direct plating in the manner described above, various kinds of electrolytic copper-plating or electrolytic nickel plating may also be applied in accordance with the purpose.

The thus metallized plastic is confirmed to be excellent, for example, for the improvement of plating covering or improvement of adhesiveness.

### Examples

The present invention will be described below in more detail by way of Examples and Comparative Examples, which should not be construed as limiting the present invention.

### Example 1

### Plastic surface modification treatment

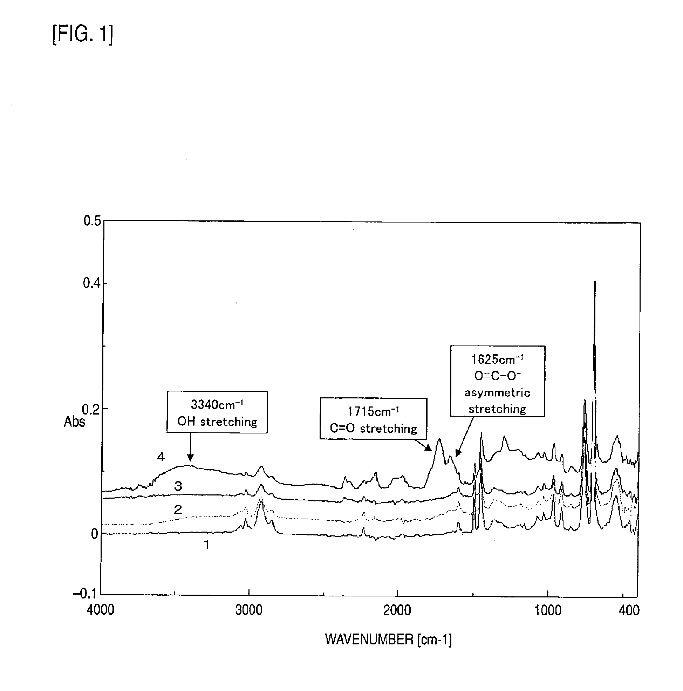

A surface modification liquid containing potassium permanganate at 0.03M concentration, phosphoric acid at 7.5M concentration, and nitric acid at 3.9M concentration was prepared. The surface modification liquid was heated to 30°C, in which an ABS resin molding body (manufactured by UMGABS Co.: 50 × 100 × 3 mm) was immersed for 10 minutes to conduct modification treatment. Further, as a comparison, an etching solution containing anhydrous chromic acid at 3.5M concentration and sulfuric acid at 3. 6M concentration, as well as an etching solution containing potassium permanganate at 0.03M concentration, phosphoric acid at 7.5M concentration and sulfuric acid at 1.8M concentration were prepared. A modification treatment was conducted for the ABS resin molding product in the same manner as the surface modification liquid of permanganic acid, phosphoric acid, and nitric acid except for warming the etching solution containing chromic acid and sulfuric acid to 65°C and etching solution containing permanganic acid, phosphoric acid and sulfuric acid to 30°C. Formation of surface functional groups on the ABS resin molding product after the modification treatment was analyzed by the one-time reflection ATR method using a Fourier transform infrared spectrophotometer (FT/IR6100FV manufactured by Jasco Corp.). The results are shown in Figure 1.

According to the result of the FT-IR analysis, peaks attributable to hydroxyl groups near 3340 cm⁻¹, attributable to carbonyl groups near 1715 cm⁻¹, and attributable to carboxyl groups near 1625 cm⁻¹ were observed at the surface of the ABS resin molding product treated with the surface modification liquid containing permanganic acid, phosphoric acid, and nitric acid. The result showed that the surface modification liquid modifies the surface of a resin substrate more strongly by chemical oxidation. On the other hand, since peaks for the functional groups did not appear on the surface of the ABS resin molding product treated with the chromic acid/sulfuric acid etching solution or the permanganic acid, phosphoric acid and sulfuric acid etching solution, it was confirmed that the etching solutions provided less resin modification effect.

### Production Example 1

### Preparation of palladium-bislysinate complex ([Pd(Lys)₂]²⁺)

0.21 g of palladium chloride (special grade, manufactured by Toyo Chemical Industrial Co., Ltd.) and 0.52 g of L-lysine hydrochloride salt (special grade, manufactured by Wako Pure Chemical Industries, Ltd.) were added to 500 mL of pure water and completely dissolved by stirring at 70°C for 1 hour. Then, pH of the solution was adjusted to 6.0 with potassium hydroxide (special grade, manufactured by Wako Pure Chemical Industries Co. , Ltd.), to obtain a processing solution for catalyst application having an equivalent metallic palladium concentration of 250 mg/L.

### Example 2

### Electroless plating onto ABS resin surface

### (Electroless plating method)

An ABS resin molding product (manufactured by UMGABS Co.; 50 × 100 × 3 mm) was used as a plastic molding product, which was immersed for 10 minutes in the surface modification liquid of a composition shown in Table 1 controlled to 30°C, to conduct a modification treatment.

Then, the catalyst solution of the palladium-bislysinate complex prepared in Production Example 1 was adjusted to pH 6.0 and 50°C, to which the ABS resin molding product was immersed for 5 minutes to apply palladium ions. Then, it was immersed in a reducing solution at 35°C containing 10 mL/L of an activation treatment solution PC-66H (manufactured by Ebara Udylite Co. , Ltd. ) for 1 minute to reduce palladium ions into metal (reducing treatment). Then, this was immersed for 10 minutes in an electroless nickel plating solution NI-5 (manufactured by Ebara Udylite Co., Ltd.) adjusted to pH 8.8 and 35°C to form a 0.5 µm nickel-phosphorus film. Then, the nickel surface was replaced with copper by a conditioning liquid PDC (manufactured by Ebara Udylite Co., Ltd. ) , which was further applied with plating by using a copper sulfate plating solution EP-30 containing 0.9M copper sulfate, 0.55 M sulfuric acid and 0.0017M chlorine (manufactured by Ebara Udylite Co. , Ltd. ) under the condition at 25°C with 3A/dm² for 40 minutes to form a copper film to 20 µm thickness. Then, an annealing treatment was conducted at 80°C for 1 hour. The water washing treatment was conducted between the steps. Then, the adsorption amount and the adhesion strength of the palladium catalyst were measured by the following measuring methods. Further, the deposition property of the electrolessly plated film was evaluated according to the following criteria. Table 1 shows the results of measurement and evaluation.

### (Measurement and evaluation method)

### Adsorption amount of palladium catalyst

After applying a reducing treatment to palladium ions adsorbed onto a plastic surface, palladium was dissolved with aqua regia and the adsorption amount of palladium was determined by measuring the absorption of the solution using an atomic absorption photospectrometer AA 240FS (manufactured by Varian Inc.).

### Adhesion strength measurement

An electrolytic copper plated film with a thickness of about 20 µm was formed according to Exhibit 6 of JIS H8630 on the plastic surface. After annealing the film at 80°C for 1 hour, the adhesion strength was measured by a tensile tester AGS-H 500N (manufactured by Shimadzu Corp.).

### Evaluation for deposition property of plated film

After visually observing the deposition state of the electrolessly plated film on the plastic surface, it was evaluated according to the following criteria:

| (Content) | (Evaluation) |
|---|---|
| Covered over the entire surface: | ○ |
| Covered partially: | △ |
| Not-plated: | × |

**[Table 1]**

| | Potassium permanganate | Phosphoric acid | Nitric acid | Palladium catalyst adsorption amount (mg/dm²) | Deposition property of electrolessly plated film | Adhesion strength (kgf/cm) |
|---|---|---|---|---|---|---|
| Comp. 1 | 0.03M | 7.5M | 0 | 0.08 | × | - |
| Comp. 2 | 0.03M | 7.5M | 1.3M | 0.19 | ○ | 1.2 |
| Comp. 3 | 0.03M | 7.5M | 2.6M | 0.38 | ○ | 1.2 |
| Comp. 4 | 0.03M | 7.5M | 3.9M | 0.57 | ○ | 0.7 |

| | | | | | | |
|---|---|---|---|---|---|---|
| -: measurement impossible | | | | | | |

By treating the ABS resin molding product with the surface modification liquid containing potassium permanganate, phosphoric acid, and nitric acid, electroless nickel plated film was formed at each of nitric acid concentration. Further, the adsorption amount of the palladium catalyst increased as the nitric acid concentration increased in the modification liquid. Further, in this case, deposition was not caused to a plating jig coated with vinyl chloride sol and selective plating to the ABS resin molding product was possible in any of the treatments.

### Example 3

### Electroless plating onto PC/ABS resin surface:

Electroless plating and measurement and evaluation as in Example 2 were conducted except for using a PC/ABS resin molding product (manufactured by UMGABS Co.; 50 × 100 × 3 mm) containing 65% polycarbonate as the plastic molding product of Example 2 and conducting a modification treatment by immersing the same in a surface modification liquid containing 0.03M potassium permanganate, 7. 5M phosphoric acid, and 0M or 3.9M nitric acid at 30°C for 10 minutes. The result is shown in Table 2.

**[Table 2]**

| | Potassium permanganate | Phosphoric acid | Nitric acid | Palladium catalyst adsorption amount (mg/dm²) | Deposition property of electrolessly plated film | Adhesion strength (kgf/cm) |
|---|---|---|---|---|---|---|
| Comp. 5 | 0.03M | 7.5M | 0 | 0.02 | × | - |
| Comp. 6 | 0.03M | 7.5M | 3.9M | 0.24 | ○ | 0.8 |

| | | | | | | |
|---|---|---|---|---|---|---|
| -: Measurement impossible | | | | | | |

Electroless nickel plated film was formed by treating the PC/ABS resin molding product with the modification liquid containing potassium permanganate, phosphoric acid, and nitric acid. Further, in this case, deposition was not caused to a plating jig coated with vinyl chloride sol and selective plating to the PC/ABS resin molding product was possible.

### Example 4

### Direct plating onto ABS resin surface

### (Direct plating method)

The ABS resin molding product identical with that in Example 2 was used as a plastic molding product, which was immersed for 10 minutes in the surface modification liquid shown in Table 3 controlled to 30°C, to conduct a modification treatment.

Then, the ABS resin molding product was immersed in a solution containing 0.01M bismuth nitrate and 0. 03M nitric acid at 25°C for 5 minutes. Successively, it was treated with a solution containing sodium sulfide at 0.1M concentration for 30 seconds to form a conduction film of bismuth sulfide on the ABS resin surface (sulfuration treatment). After a water washing treatment and drying subsequent to the treatment described above, plating was conducted by using an electrolytic nickel plating solution (Watts bath containing nickel sulfate at 0.75M concentration, nickel chloride at 0.4M concentration and boric acid at 0.55M concentration) under the condition at 45°C with 3A/dm² for 5 minutes to form a nickel film. Then, the nickel film surface was replaced with copper by a conditioning liquid PDC (manufactured by Ebara Udylite Co., Ltd.), to form an electrolytic copper plated film at 20 µm thickness in the same manner as in Example 2. Then, an annealing treatment was conducted at 80°C for 1 hour. A washing treatment was conducted between the steps. Then, the adsorption amount of bismuth, and the film forming rate and the adhesion strength of nickel plating were measured by the following measuring method. The results of measurement are shown in Table 3.

### (Measuring method)

### Measurement for bismuth adsorption amount

After sulfuration treatment for the plastic surface, bismuth was dissolved with aqua regia, and the adsorption amount of bismuth was determined by measuring the absorbance of the solution using an atomic absorption photospectrometer. Measurement for film forming rate of nickel plating
Plating was conducted for 1 minute while setting voltage for electrolytic nickel plating at 1 V and the rate of plating deposition proceeding on the plastic surface was measured. Adhesion strength
It was measured by the same method as in Example 2.

**[Table 3]**

| | Potassium permanganate | Phosphoric acid | Nitric acid | Bismuth adsorption amount (mg/dm²) | Nickel plated film forming rate (mm/min) | Adhesion strength (kgf/cm) |
|---|---|---|---|---|---|---|
| Comp. 7 | 0.03M | 7.5M | 0 | 0.29 | 10 | 1.0 |
| Comp. 8 | 0.03M | 7.5M | 1.3M | 0.58 | 50 | 1.1 |
| Comp. 9 | 0.03M | 7.5M | 2.6M | 1.03 | 50 | 1.2 |
| Comp 10 | 0.03M | 7.5M | 3.9M | 1.82 | 30 | 0.7 |

It was confirmed that the adsorption amount of bismuth sulfide increased along with increase of the nitric acid concentration in the modification liquid to increase the film forming rate. Further, direct plating was possible on the surface of the ABS resin molding product at any nitric acid concentration and electrolytic nickel plated film was formed. Further, in any of the treatments, electrolytic nickel plating did not deposit to the vinyl chloride sol coating of the electrolytic nickel plating jig and selective plating to the ABS resin molding product was possible.

### Example 5

### Direct plating onto PC/ABS resin surface

Direct plating and measurement and evaluation as in Example 4 were conducted except for using a PC/ABS resin molding product (manufactured by UMGABS Co.; 50 × 100 × 3 mm) containing 65% polycarbonate as the plastic molding product of Example 4 and conducting a modification treatment by immersing the same in a surface modification liquid containing 0.03M potassium permanganate, 7.5M phosphoric acid and 0M or 3. 9M nitric acid at 30°C for 10 minutes. The result is shown in Table 4.

**[Table 4]**

| | Potassium permanganate | Phosphoric acid | Nitric acid | Bismuth adsorption amount (mg/dm²) | Nickel plated film forming rate (mm/min) | Adhesion strength (kgf/cm) |
|---|---|---|---|---|---|---|
| Comp. 11 | 0.03M | 7.5M | 0 | 0.13 | 0 | - |
| Comp. 12 | 0.03M | 7.5M | 3.9M | 0.73 | 30 | 0.7 |

| | | | | | | |
|---|---|---|---|---|---|---|
| -: Measurement impossible | | | | | | |

Direct plated film was formed by treating the PC/ABS resin molding product with the modification liquid containing potassium permanganate, phosphoric acid, and nitric acid. Further, electrolytic nickel plating did not deposit to the vinyl chloride sol coating of the electrolytic nickel plating jig and selective plating to the PC/ABS resin molding product was possible.

### Example 6

### Investigation on bath stability

1 L of surface modification liquid containing potassium permanganate, phosphoric acid, and nitric acid with the following composition was prepared, and the decomposition amount of permanganic acid contained therein per one day was measured by a photospectrometer UV-2500 PC (manufactured by Shimadzu Corporation). Further, as a comparison, an etching liquid containing potassium permanganate, phosphoric acid, and sulfuric acid was prepared and the decomposition amount of permanganic acid contained therein per one day was measured in the same manner as described above.

**[Table 5]**

| | Potassium permanganate | Phosphoric acid | Nitric acid | Sulfuric acid | Permanganic acid decomposition amount (g/day) |
|---|---|---|---|---|---|
| Comp. 13 | 0.03M | 7.5M | 3.9M | 0 | 1.5 |
| Comp. 14 | 0.03M | 7.5M | 0 | 3.6M | Decomposed just after preparation |

The etching liquid containing potassium permanganate, phosphoric acid, and sulfuric acid was decomposed just after preparation and stable use was impossible, whereas the surface modification liquid containing potassium permanganate, phosphoric acid, and nitric acid was stable and excellent.

### Example 7

### Effect of each ingredient

A surface modification liquid containing potassium permanganate, phosphoric acid, and nitric acid, and etching liquids containing two of potassium permanganate, phosphoric acid, and nitric acid were prepared. They were heated to 30°C and the surface of the ABS resin molding product was applied with the modification treatment in the same manner as in Example 2. Then, after conducting electroless plating in the same manner as in Example 2, measurement for the adsorption amount of the palladium catalyst and measurement for the adhesion strength were conducted in the same manner as in Example 2 and, further, the deposition property was evaluated. Further, the water wettability of the ABS resin surface after the etching treatment using the surface modification liquid or the etching liquids was compared by measuring the contact angle using a contact angle meter CA-X150 (manufactured by Kyowa Interface Science Co., Ltd.). The results of measurement and evaluation are shown in Table 6. Further, direct plating was conducted by the same method as in Example 4 by using the surface modification liquid or the etching liquids and, the adsorption amount of bismuth, and the film forming rate and the adhesion strength of nickel plating were measured in the same manner. The results are shown in Table 7.

**[Table 6]**

| | Potassium permanganate | Phosphoric acid | Nitric acid | Contact angle | Palladium catalyst adsorption amount (mg/dm²) | Deposition property of electrolessly plated film | Adhesion strength (kgf/cm) |
|---|---|---|---|---|---|---|---|
| Comp. 15 | 0.03M | 7.5M | 1.3M | 32.3° | 0.19 | ○ | 1.2 |
| Comp. 16 | 0 | 7.5M | 1.3M | 76.4° | 0 | × | - |
| Comp. 17 | 0.03M | 0 | 1.3M | 75.1° | 0 | × | - |
| Comp. 18 | 0.03M | 7.5M | 0 | 46.9° | 0.08 | × | - |

| | | | | | | | |
|---|---|---|---|---|---|---|---|
| -: Measurement impossible | | | | | | | |

**[Table 7]**

| | Potassium permanganate | Phosphoric acid | Nitric acid | Contact angle | Bismuth adsorption amount (mg/dm²) | Nickel plated film forming rate (mm/min) | Adhesion strength (kgf/cm) |
|---|---|---|---|---|---|---|---|
| Comp. 15 | 0.03M | 7.5M | 1.3M | 32.3° | 0.58 | 50 | 1.1 |
| Comp. 16 | 0 | 7.5M | 1.3M | 76.4° | 0.02 | 0 | - |
| Comp. 17 | 0.03M | 0 | 1.3M | 75.1° | 0.11 | 0 | - |
| Comp. 18 | 0.03M | 7.5M | 0 | 46.9° | 0.29 | 30 | 1.0 |

| | | | | | | | |
|---|---|---|---|---|---|---|---|
| -: Measurement impossible | | | | | | | |

Since modification for the ABS resin was weak when using the etching liquid only consisting of phosphoric acid and nitric acid and the etching liquid only consisting of permanganic acid and nitric acid, water wettability after treatment was poor and film formation was impossible by electroless plating or direct plating. Further, since the water wettability was obtained but modification was weak when using the etching liquid only consisting of permanganic acid and phosphoric acid, the palladium adsorption amount was small and electrolessly plated film formation was impossible. On the other hand, when using the etching liquid only consisting of permanganic acid and phosphoric acid, although direct plating could be conducted, the film forming rate was slow. In view of the results, it was confirmed that three ingredients of permanganic acid, phosphoric acid, and nitric acid are essential ingredients.

### Example 8

### Comparison with etching liquid containing chromic acid

The surface of the ABS resin molding product was applied with a modification treatment in the same manner as in Example 2 by using a surface modification liquid containing potassium permanganate at 0.03M concentration, phosphoric acid at 7.5M concentration, and nitric acid at 3.9M concentration, or an etching liquid containing anhydrous chromic acid at 3.5M concentration and sulfuric acid at 3.6M concentration. Then, after conducting electroless plating in the same manner as in Example 2, measurement for the adsorption amount of the palladium catalyst and measurement for the adhesion strength were conducted in the same manner as in Example 2 and, further, the deposition property was evaluated. The result of measurement and evaluation are shown in Table 8. Direct plating was conducted by the same method as in Example 4 by using the surface modification liquid or the etching liquid and, the adsorption amount of bismuth, and the film forming rate and the adhesion strength of nickel plating were measured in the same manner, and the results are shown in Table 9.

**[Table 8]**

| | Potassium permanganate | Phosphoric acid | Nitric acid | Chromic acid | Sulfuric acid | Palladium catalyst adsorption amount (mg/dm²) | Deposition property of electroless ly plated film | Adhes ion stren gth (kgf/ cm) |
|---|---|---|---|---|---|---|---|---|
| Comp. 19 | 0.03M | 7.5M | 1.3M | 0 | 0 | 0.57 | ○ | 0.7 |
| Comp. 20 | 0 | 0 | 0 | 3.5M | 3.6M | 0.03 | × | - |

| | | | | | | | | |
|---|---|---|---|---|---|---|---|---|
| -: Measurement impossible | | | | | | | | |

**[Table 9]**

| | Potassium permanganate | Phosphoric acid | Nitric acid | Chromic acid | Sulfuric acid | Bismuth adsorption amount (mg/dm²) | Nickel plated film forming rate (mm/min ) | Adhesion strength (kgf/cm) |
|---|---|---|---|---|---|---|---|---|
| Comp. 19 | 0.03M | 7.5M | 1.3M | 0 | 0 | 1.82 | 30 | 0.7 |
| Comp. 20 | 0 | 0 | 0 | 3.5M | 3.6M | 0.13 | 0 | - |

| | | | | | | | | |
|---|---|---|---|---|---|---|---|---|
| -: Measurement impossible | | | | | | | | |

The etching liquid containing chromic acid and sulfuric acid showed extremely less metal adsorption amount for palladium or bismuth as 10% or less compared with the surface modification liquid containing potassium permanganese, phosphoric acid, and nitric acid, and film formation by electroless plating or direct plating was impossible.

### Example 9

### Electroless plating or direct plating onto the surface of various kinds of plastics

Surface of each plastic described in Table 10 was applied with a modification treatment by using a surface modification liquid containing potassium permanganate at 0.03M concentration, phosphoric acid at 7.5M concentration, and nitric acid at 3.9M concentration (product of the invention) or an etching liquid containing potassium permanganate at 0.03M concentration and phosphoric acid at 7.5M concentration (comparative product). Then, after conducting electroless plating in the same manner as in Example 2, the deposition property was evaluated according to the following criteria. Further, direct plating was conducted by using the surface modification liquid or the etching liquid in the same manner as in Example 4 and the adsorption amount of bismuth was measured also in the same manner. Further, the water wettability of the plastic surface after the etching treatment was evaluated according to the following criteria, by measuring the contact angle using a contact angle meter CA-X 150 (manufactured by Kyowa Interface Science Co., Ltd.). The results are shown in Table 10.

| (Evaluation criteria for water wettability) | |
|---|---|
| (Content) | (Evaluation) |
| Contact angle of less than 50°: | ○ |
| Contact angle of 50° or more and less than 60°: | △ |
| Contact angle of 60° or more: | × |

| (Evaluation criteria for deposition property of electrolessly plated film) | |
|---|---|
| (Content) | (Evaluation) |
| Deposited for the entire surface: | ○ |
| Deposited partially: | △ |
| Not plated: | × |

**[Table 10]**

| Plastic | Water wettability | | Bismuth adsorption amount (mg/dm²) | | Deposition property of electrolessly plated film | |
|---|---|---|---|---|---|---|
| | Product of the invention | Comparative product | Product of the invention | Comparative product | Product of the invention | Comparative product |
| ABS | ○ | ○ | 1.82 | 0.29 | ○ | ○ |
| PC/ABS | ○ | ○ | 0.73 | 0.13 | ○ | × |
| Modified PPE+PS (noryl resin) | ○ | ○ | 1.24 | 0.42 | ○ | ○ |
| AS (acrylonitrile styrene) | ○ | × | 1.47 | 0.33 | ○ | × |
| PET (polyethylene terephthalate) | ○ | × | 1.29 | 0.13 | ○ | × |
| PE (polyethylene) | ○ | × | 0.34 | 0.05 | ○ | × |
| LCP (Vecster) | ○ | ○ | 0.12 | 0.09 | ○ | △ |
| BT (bismaleimide triazine) | ○ | ○ | 0.67 | 0.42 | ○ | △ |
| PI (polyimide) | ○ | ○ | 0.12 | 0.05 | ○ | × |
| PA (polyamide) | ○ | ○ | 0.48 | 0.31 | ○ | ○ |

It was confirmed that the surface modification liquid containing potassium permanganate, phosphoric acid, and nitric acid provides a water wettability to engineering plastics such as PPE, PET, and LCP having high chemical resistance as well as general-purpose plastics such as ABS, has high surface modifying effect and is free from problems in the subsequent plating deposition.

### Example 10

### Effect of addition of perchloric acid to the surface modification liquid

The adsorption amount of a palladium catalyst to the ABS resin molding product was measured, and the deposition property and the adhesion strength of the electrolessly plated film were evaluated with surface modification liquids containing potassium permanganate, phosphoric acid, nitric acid, and perchloric acid of the compositions described in the following table 11 in the same manner as in Example 2. Further, direct plating was conducted using the following modification liquids in the same manner as in Example 4, and the adsorption amount of bismuth, and the film forming rate and the adhesion strength of nickel plating were measured also in the same manner. The results of evaluation are shown in Table 11 and Table 12.

**[Table 11]**

| | Potassium permanganate | Phosphoric acid | Nitric acid | Perchloric acid | Palladium catalyst adsorption amount (mg/dm²) | Deposition property of electrolessly plated film | Adhesion strength (kgf/cm) |
|---|---|---|---|---|---|---|---|
| Comp. 21 | 0.03M | 7.5M | 0 | 0 | 0.08 | × | - |
| Comp. 22 | 0.03M | 7.5M | 1.3M | 0 | 0.19 | ○ | 1.2 |
| Comp. 23 | 0.03M | 7.5M | 1.3M | 1.5M | 0.33 | ○ | 1.2 |

| | | | | | | | |
|---|---|---|---|---|---|---|---|
| -: Measurement impossible | | | | | | | |

**[Table 12]**

| | Potassium permanganate | Phosphoric acid | Nitric acid | Perchloric acid | Bismuth adsorption amount (mg/dm²) | Deposition property of nickel plated film (mm/min) | Adhesion strength (kgf/cm) |
|---|---|---|---|---|---|---|---|
| Comp. 21 | 0.03M | 7.5M | 0 | 0 | 0.29 | 10 | 1.0 |
| Comp. 22 | 0.03M | 7.5M | 1.3M | 0 | 0.58 | 50 | 1.1 |
| Comp. 23 | 0.03M | 7.5M | 1.3M | 1.5M | 1.15 | 50 | 1.2 |

It was confirmed that the surface modification effect was enhanced and the metal adsorption amount was increased by further adding perchloric acid to the surface modification liquid containing potassium permanganate, phosphoric acid, and nitric acid.

### Example 11

### Effect of additional treatment after surface modification:

An ABS resin molding product after the same modification treatment as in Example 2 with the surface modification liquid containing potassium permanganate at 0.03M concentration, phosphoric acid at 7.5M concentration and nitric acid at 1.3M concentration was further immersed in an aqueous alkaline solution of permanganic acid (pH 13.5) containing potassium permanganate at 0.13M concentration and sodium hydroxide at 0.5M concentration at 60°C for 3 minutes. For the ABS resin molding product treated with the aqueous alkaline solution of permanganic acid, the adsorption amount of the palladium catalyst was measured, and the deposition property and the adhesion strength of the electrolessly plated film were evaluated. Further, direct plating was conducted in the same manner as in Example 4 and the adsorption amount of bismuth, and the film forming rate and the adhesion strength of nickel plating were measured in the same manner. The results of evaluation are shown in Table 13 and Table 14.

**[Table 13]**

| Treatment with aqueous alkaline permanganic acid solution | Palladium catalyst adsorption amount (mg/dm²) | Deposition property of electrolessly plated film | Adhesion strength (kgf/cm) |
|---|---|---|---|
| Not applied | 0.19 | ○ | 1.2 |
| Applied | 0.24 | ○ | 1.2 |

**[Table 14]**

| Treatment with aqueous alkaline permanganic acid solution | Bismuth adsorption amount (mg/dm²) | Nickel plating film forming rate (mm/min) | Adhesion strength (kgf/cm) |
|---|---|---|---|
| Not applied | 0.58 | 50 | 1.1 |
| Applied | 0.88 | 50 | 1.2 |

It was confirmed that the surface modification effect was enhanced and the metal adsorption amount was increased by further treating ABS with the aqueous alkaline solution of permanganic acid after modification with the surface modification liquid containing potassium permanganate, phosphoric acid, and nitric acid.

### Industrial Applicability

Since the surface modification liquid of the invention can form hydrophilic groups such as hydroxyl groups, carbonyl groups, and carboxyl groups to the plastic surface, the metal adsorption amount can be increased by the subsequent step.

Accordingly, excellent metal films can be formed on the plastic surface by applying a catalyst and carrying out metal plating after conducting modification to the plastic surface with the surface modification liquid of the invention.

### Brief Description of the Drawings

[Fig. 1] FT-IR spectra on the surface of an ABS resin molding product are shown(1 denotes FT-IR spectra on the ABS resin molding product surface before a modification treatment; 2 denotes FT-IR spectra on the ABS resin molding product surface after a modification treatment using an etching liquid containing chromic acid and sulfuric acid; 3 denotes FT-IR spectra on the ABS resin molding product surface after modification treatment using an etching liquid containing permanganic acid, phosphoric acid, and sulfuric acid; and 4 denotes FT-IR spectra on the ABS resin molding product surface after a modification treatment using the surface modification liquid of the invention containing permanganic acid, phosphoric acid, and nitric acid).

## Claims

1. A surface modification liquid for plastic **characterized by** containing permanganic acid, phosphoric acid, and nitric acid.

2. The surface modification liquid for plastic according to claim 1, **characterized by** containing nitric acid at 0.1 mol/L or more.

3. The surface modification liquid for plastic according to claim 1 or 2, further containing perchloric acid.

4. A method of metallizing a plastic surface **characterized by** treating the plastic surface with the surface modification liquid for plastic according to any one of claims 1 to 3, then applying a catalyst and carrying out metal plating.

5. The method of metallizing a plastic surface according to claim 4, wherein the plastic surface is treated with the surface modification liquid at a temperature of 0°C to 50°C.

6. The method of metallizing a plastic surface according to claim 4 or 5, wherein the metal plating is electroless metal plating.

7. The method of metallizing a plastic surface according to claim 4 or 5, wherein the metal plating is electrolytic plating.

8. A method of metallizing a plastic surface **characterized by** treating the plastic surface with the surface modification liquid for plastic according to any one of claims 1 to 3, then further treating the same with an aqueous alkaline solution of permanganic acid, then applying a catalyst and, subsequently, carrying out metal plating.

9. The method of metallizing a plastic surface according to claim 8, wherein the plastic surface is treated with the surface modification liquid at a temperature of from 0°C to 50°C.

10. The method of metallizing a plastic surface according to claim 8 or 9, wherein the metal plating is electroless metal plating.

11. The method of metallizing a plastic surface according to claim 8 or 9, wherein the metal plating is electrolytic plating.

12. A method of metallizing a plastic surface **characterized by** treating a plastic surface with the surface modification liquid for plastic according to any one of claims 1 to 3, then forming a metal sulfide film and carrying out metal plating.

13. The method of metallizing a plastic surface according to claim 12, wherein the plastic surface is treated with the surface modification liquid at a temperature of from 0°C to 50°C.

14. The method of metallizing a plastic surface according to claim 12 or 13, wherein the metal plating is electrolytic plating.

15. A method of modifying a plastic surface **characterized by** treating the plastic surface with the surface modification liquid for plastic according to any one of claims 1 to 3.

16. The method of modifying a plastic surface according to claim 15, wherein the plastic surface is treated with the surface modification liquid at a temperature of from 0°C to 50°C.
